(19)

**Europäisches Patentamt**
**European Patent Office**
**Office européen des brevets**

(11) **EP 2 865 730 A1**

(12) **EUROPÄISCHE PATENTANMELDUNG**

(43) Veröffentlichungstag:
**29.04.2015 Patentblatt 2015/18**

(51) Int Cl.:
***C09K 5/16*** (2006.01)

(21) Anmeldenummer: **13190273.6**

(22) Anmeldetag: **25.10.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Grau Sorarrain, Esteban**
**40215 Düsseldorf (DE)**

• **Jäkel, Christian**
**45468 Mülheim an der Ruhr (DE)**
• **Koebe, Mario**
**45478 Mülheim an der Ruhr (DE)**
• **Kowalski, Matthias**
**45470 Mülheim an der Ruhr (DE)**
• **Lehmann, Christoph**
**47506 Neukirchen-Vluyn (DE)**
• **Mashkin, Andrey**
**50672 Köln (DE)**
• **Plotnikova, Olga**
**42369 Wuppertal (DE)**
• **Schild, Carolin**
**45478 Mülheim an der Ruhr (DE)**

(54) **Kühlvorrichtung für eine elektrische Maschine und elektrische Maschine mit der Kühlvorrichtung**

(57) Die vorliegende Erfindung offenbart eine Kühlvorrichtung für eine elektrische Maschine. In der elektrischen Maschine kann ein Kühlmittel in Hohlräumen strömen, wobei die Kühlvorrichtung mindestens eine Reaktionskomponente umfasst, die unter Aufnahme von Wärme in einer Reaktion zu mindestens einem komplementären Produkt umgewandelt wird. Die Erfindung offenbart weiter eine elektrische Maschine mit einem Stator und einem Rotor umfassend die erfindungsgemäße Kühlvorrichtung.

EP 2 865 730 A1

**Beschreibung**

Die Erfindung betrifft eine Kühlvorrichtung für eine elektrische Maschine, in der ein Kühlmittel in Hohlräumen der elektrischen Maschine strömbar ist, wobei die Kühlvorrichtung mindestens eine Reaktionskomponente umfasst, die unter Aufnahme von Wärme in einer Reaktion zu mindestens einem komplementären Produkt umgewandelt wird. Die Erfindung betrifft weiter eine elektrische Maschine umfassend die erfindungsgemäße Kühlvorrichtung.

Bekanntermaßen entstehen in elektrischen Maschinen, wie zum Beispiel Generatoren, Verluste in Form von Wärme bei der Umwandlung von mechanischer in elektrischer Energie und umgekehrt. Daher ist es erforderlich, aktive Bauteile, also jene, in denen Verluste entstehen, möglichst effizient zu kühlen. Eine maximal zulässige Grenzwerttemperatur für den Betrieb einer elektrischen Maschine ergibt sich aus den Isolierstoffklassen der verwendeten Isolierstoffe, welche stromführende Bauteile untereinander und gegen das Gehäuse elektrisch isolieren. Im laufenden Betrieb muss sichergestellt sein, dass diese Grenzwerttemperaturen nicht überschritten werden. Andernfalls ist die erforderliche Isolierung durch schnellere Alterung beeinträchtigt.

Darüber hinaus ist durch die entstehende Erwärmung der elektrischen Maschine die maximale Leistung, mit der die elektrische Maschine betrieben werden kann, begrenzt. Es besteht also ein Interesse daran, die elektrische Maschine möglichst effizient zu kühlen.

Zur Kühlung werden in elektrischen Maschinen meist Kühlkreisläufe eingesetzt, die durch einen thermodynamischen Kreisprozess die Wärme aus dem Inneren des Generators bzw. der elektrischen Maschine abführen und typischerweise über einen Wärmetauscher an ein zweites Medium abgeben. Durch eine geeignete Wahl der Hohlräume innerhalb der elektrischen Maschine ergibt sich ein Strömungsnetzwerk in der elektrischen Maschine, durch welches zu kühlende Bauteile der elektrischen Maschine, gekühlt werden können. Das Strömungsnetzwerk legt mit seiner Geometrie ein Verhältnis von Kühlmittelmassenströmen fest, die einzelne der aktiven Bauteile, zum Beispiel Rotor, Stator, Blechpaketendzonen, dem Statorwicklungsbereich und/oder Blechpakete bzw. Laschen am Statorwicklungskopf gekühlt werden. Für eine gegebene elektrische Maschine ist die Geometrie dieses Strömungsnetzwerks festgelegt. Daraus ergibt sich, dass ebenso das Verhältnis der Kühlmittelmassenströme zueinander festgelegt ist, woraus sich wiederum ein festgelegtes Verhältnis ergibt, in dem einzelne der Bauteile gekühlt werden.

Im Stand der Technik ist es nicht möglich, dieses Verhältnis von Kühlmittelmassenströmen und damit der an bestimmten aktiven Bauteilen verfügbaren Kühlleistung, zu beeinflussen.

Die Aufgabe der Erfindung ist es, diese Nachteile im Stand der Technik zu überwinden, wodurch die Kühlung einzelner Bauteile der elektrischen Maschine an unterschiedliche Betriebszustände der Maschine angepasst werden kann und außerdem aufgrund der dadurch effizienteren Kühlung eine höhere Wärmeentwicklung kompensiert werden kann, so dass eine höhere Leistung der elektrischen Maschine möglich wird.

Durch eine effizientere Kühlung lässt sich ein Überschreiten der zulässigen Grenzwerttemperaturen vermeiden. Dadurch wird zudem die Lebensdauer der elektrischen Maschine mit der erfindungsgemäßen Kühlvorrichtung erhöht, da eine zusätzliche Beanspruchung durch zu hohe Temperaturen vermieden wird.

Die erfindungsgemäße Kühlvorrichtung für eine elektrische Maschine umfasst Hohlräume, in denen ein Kühlmittel innerhalb der elektrischen Maschine strömbar ist. Die Kühlvorrichtung umfasst weiter mindestens eine Reaktionskomponente, die unter Aufnahme von Wärme in einer Reaktion zu mindestens einem komplementären Produkt umgewandelt wird. Bevorzugt ist die Reaktion eine endotherme Reaktion, da heißt es wird Wärme aufgenommen. Dadurch ergibt sich eine Kühlung der Kühlvorrichtung und damit auch der elektrischen Maschine.

Es kann bevorzugt sein, dass die Reaktion oberhalb einer Zieltemperatur einsetzt und/oder von Katalysatoren unterstützt wird. Dadurch lässt sich zum einen erreichen, dass die zusätzliche Kühlung aufgrund der endothermen Reaktion erst oberhalb einer Grenztemperatur einsetzt, um ab dieser Temperatur einen zusätzlichen Kühleffekt bereitzustellen. Weiter kann der Kühleffekt verstärkt werden durch die Verwendung von Katalysatoren, welche die Reaktion begünstigen.

Bevorzugt kann die Reaktionskomponente an einer Fläche der elektrischen Maschine angebracht sein. Es ist bevorzugt, dass es sich bei dieser Fläche um eine solche Fläche handelt, die hohen thermischen Beanspruchungen im Betrieb der elektrischen Maschine ausgesetzt sind. Daraus ergibt sich vorteilhaft, dass insbesondere solche Flächen und Bestandteile der elektrischen Maschine aufgrund der Reaktion gekühlt werden, die einer hohen thermischen Belastung ausgesetzt sind. Es kann also insbesondere eine gezielte Kühlung der stark thermisch beanspruchten Flächen und Abschnitte erfolgen.

Bevorzugt kann die Kühlvorrichtung gemäß der Erfindung derart gestaltet sein, dass das Kühlmittel die mindestens eine Reaktionskomponente und/oder das mindestens eine komplementäre Produkt umfasst. Diese Ausführungsform der Kühlvorrichtung ist von Vorteil, da sich für solche Konstellationen eine einfache Erweiterung bestehender elektrischer Maschinen um die erfindungsgemäße Kühlvorrichtung realisieren lässt.

Bevorzugt kann die Kühlvorrichtung Ammoniak als Reaktionskomponente umfassen und die Reaktion eine Zerlegung des Ammoniaks umfassen.

Weiter bevorzugt kann das komplementäre Produkt Stickstoff $N_2$ und/oder Wasserstoff umfassen. Vorteilhaft wird dabei die zusätzliche Kühlung aufgrund der Reaktion durch bekannte Materialien, insbesondere Ammoniak erreicht.

Weiter bevorzugt kann das mindestens eine komplementäre Produkt in einer Rückreaktion unter Abgabe von Wärme in die mindestens eine Reaktionskomponente umgewandelt werden. Ein Reaktionssystem, das eine Rückreaktion unter Abgabe von Wärme bereitstellt, erleichtert die Realisierung von Kreisprozessen, da das komplementäre Produkt, welches die aufgenommene Wärme enthält, in der Rückreaktion die gespeicherte Wärme zumindest teilweise wieder abgibt, wodurch die Reaktionskomponente wieder zur Verfügung steht.

Weiter bevorzugt kann die Rückreaktion in einem Kreisprozess ablaufen und die durch die Rückreaktion umgewandelte mindestens eine Reaktionskomponente der elektrischen Maschine wieder zugeführt werden. Vorteilhaft steht dadurch die Reaktionskomponente erneut zur Aufnahme von Wärme und der damit verbundenen Kühlung der elektrischen Maschine zur Verfügung.

Die mindestens eine Reaktionskomponente kann vorteilhaft Methanol umfassen, das durch die Reaktion aufgespalten wird. Vorzugsweise kann das komplementäre Produkt der Reaktionskomponente Methanol, Methanal HCHO, Kohlenmonoxid CO und/oder elementaren Wasserstoff $H_2$ umfassen.

Weiter bevorzugt kann die mindestens eine Reaktionskomponente ein Metallhydrid umfassen, bevorzugt Calciumhydrid $CaH_2$, und die Reaktion eine Dehydrierung des Methallhydrids sein.

In einer Ausführungsform der Kühlvorrichtung umfasst das mindestens eine komplementäre Produkt Wasserstoff, elementaren Wasserstoff $H_2$ und/oder ein Metallhydroxid, insbesondere Calciumhydroxid $Ca(OH)_2$.

Gemäß einer Ausführungsform der Kühlvorrichtung kann die Reaktion mindestens eine Reaktionskomponente bevorzugt ein Metallhydroxid und/oder ein Salzhydrat umfassen und die Reaktion eine Dehydratisierung des Metallhydroxids und/oder des Salzhydrats umfassen. Weiter bevorzugt können die komplementären Produkte Wasser umfassen.

Weiter bevorzugt kann die Reaktionskomponente ein Metallcarbonat, insbesondere Calciumcarbonat $CaCO_3$ umfassen, wobei die Reaktion eine Decarboxylierung umfasst. Das heißt es wird eine Carboxylgruppe bei Ablaufen der Reaktion aus der Reaktionskomponente abgespalten.

Weiter bevorzugt kann die Reaktionskomponente ein Salzammoniat umfassen, wobei die Reaktion eine Abspaltung von Ammoniak umfasst. Das heißt es wird beim Ablaufen der Reaktion Ammoniak abgespalten.

Weiter bevorzugt kann die mindestens eine Reaktionskomponente ein Zeolith umfassen, und die Reaktion eine Adsorption von vorzugsweise Wasser an dem Zeolith umfassen. Dabei ist von Vorteil, dass die Adsorption mit der Aufnahme von Wärme verbunden ist.

In einem zweiten Aspekt offenbart die vorliegende Erfindung eine elektrische Maschine umfassend eine Kühlvorrichtung gemäß einem der vorherigen Ansprüche, die elektrische Maschine weiter umfassend einen Stator und einen Rotor.

Weiter bevorzugt ist die elektrische Maschine ein Generator oder ein Elektromotor.

Die oben beschriebenen Eigenschaften, Merkmale und Vorteile der vorliegenden Erfindung, so wie die Art und Weise, wie diese erreicht werden, werden klarer und deutlicher verständlich im Zusammenhang mit der folgenden Beschreibung der Ausführungsbeispiele.

In bekannten Generatoren und elektrischen Maschinen beruht die Kühlung auf einem strömenden Medium (Gas oder Flüssigkeit), das die entstehende Wärme durch Konvektion abführt. Die Kühlung von kritischen Bauteilen wird durch entsprechende Anpassung der Strömungswiderstände in diesen Bereichen verstärkt. Dabei sollen im Folgenden unter kritischen Bauteilen solche Bauteile der elektrischen Maschine verstanden werden, die einer hohen thermischen Belastung ausgesetzt sind.

Die Erfindung schlägt daher vor, zu einer Wärmeabfuhr, das heißt zu einer Kühlung Stoffe einzusetzen, die als Reaktionskomponenten an lokalen Heißstellen endotherm reagieren, das heißt Wärme aufnehmen und so eine Kühlung der elektrischen Maschine bewirken. Die Reaktionskomponenten werden bei der chemischen Reaktion in mindestens ein komplementäres Produkt umgewandelt.

In Betracht kommt beispielsweise die thermochemische Speicherung von Wärme in reversiblen Feststoff-Gasreaktionen nach dem Schema:

$$AB \Longleftrightarrow A + B.$$

So reagiert die Reaktionskomponente AB endotherm zu einem komplementären Produkt, das die Komponenten A und B umfasst. Dabei läuft die Zersetzung endotherm ab, das heißt mit anderen Worten der Komplex AB wird mit der abzuführenden Wärme beladen. Die komplementären Produkte A und B können wiederum als Rückreaktion der Gleichgewichtsreaktion zu der Reaktionskomponente AB reagieren, was jedoch in der Regel exotherm geschieht, so dass die in den komplementären Produkten A und B gespeicherte Wärme unter Bildung der Reaktionskomponente AB freigegeben wird.

Die Erfindung schlägt weiter vor, die mindestens eine Reaktionskomponente im obigen Fall den Komplex bzw. die Verbindung AB dem Kühlmittel zuzufügen. Dadurch wird die Kühlleistung des Kühlmittels weiter erhöht. Vorteilhaft bei der thermochemischen Speicherung von Wärme ist die hohe Dichte mit der sich Wärme speichern lässt. Darüber hinaus ist bekannt, dass die thermochemische Speicherung sich über einen weiten Temperaturbereich anwenden lässt, der sich von unterhalb Umgebungstemperatur bis zu 1000°C erstreckt. Mögliche Reaktionssysteme sind Metallhydroxide und/oder Metalloxide, die zu Metallhydraten und/oder Metallhydriden reagieren.

Die mindestens eine Reaktionskomponente kann Metallhydride umfassen, die dehydriert werden. Das bedeutet, die Reaktion unter Abgabe von Wärme ist eine Aufspaltung der Reaktionskomponente, in der Wasserstoff, insbesondere elementarer Wasserstoff, frei wird. Solche Reaktionen sind dem Fachmann bekannt. Zum Beispiel könnte Calciumhydrid $CaH_2$ dehydriert werden zu Calciumhydroxid $Ca(OH)_2$. Dem Fachmann ist bekannt, dass entsprechende Reaktionen mit Metallhydriden als die mindestens eine Reaktionskomponente möglich sind; so dass darauf an dieser Stelle nicht eingegangen werden muss.

In einer weiteren Ausführungsform kann die mindestens eine Reaktionskomponente ein Metallhydroxid sein, zum Beispiel Calciumhydroxid, das in einer Dehydratisierung in die komplementären Produkte zerfällt, wobei eines der komplementären Produkte Wasser ist, denn bei der Dehydratisierungsreaktion wird aus einem Molekül Wasser abgespalten. Sofern eine solche Dehydratisierung endotherm abläuft, ist sie für die Verwendung im Zusammenhang mit der Kühlvorrichtung der vorliegenden Erfindung interessant, da sich dadurch ein entsprechender Kühlungseffekt erreichen ließe.

Gemäß einer weiteren Ausführungsform kann die mindestens eine Reaktionskomponente ein Metallcarbonat, zum Beispiel Calciumcarbonat $CaCO_3$ umfassen und die Reaktion eine Decarboxylierung sein. Bei einer solchen Decarboxylierungsreaktion wird aus der Reaktionskomponente ein Kohlenstoffdioxidmolekül abgespalten. Sofern diese Reaktion endotherm abläuft, ist sie zur Verwendung in der erfindungsgemäßen Kühlvorrichtung nützlich. Dem Fachmann sind weitere Metallcarbonate bekannt, die unter einer endothermen Reaktion decarboxyliert werden.

Weiterhin kann die Reaktion eine Adsorption oder Desorption von Gasen oder Flüssigkeiten, insbesondere von Ammoniak oder Wasser an Silikaten, vor allem an Silikagel, Molekularsieben und Zeolithen sowie an Aktivkohle sein.

Ein Beispiel für die reversible Einlagerung eines Fluids an einem Kristallgitter ist die Hydratation bzw. Dehydratation von Magnesiumsulfat gemäß $MgSO_4 \times 7\ H_2O \Rightarrow MgSO_4 + 7\ H_2O$. Weitere Beispiele sind die entsprechenden Reaktionen von Calciumchloriddihydrat, Kupfersulfat-Pentahydrat, Kupfersulfat-Monohydrat, Calciumsulfatdihydrat oder Calciumsulfathalbhydrat.

Die Dehydratation von Kupfersulfat-Pentahydrat und Calciumsulfat-Dihydrat kann je nach Temperaturführung auf der Stufe des Mono- bzw. Halbhydrats gestoppt oder bis zum Anhydrat bzw. Anhydrid unter Abspaltung des gesamten Kristallwassers durchgeführt werden.

Als Beispiel für eine reversible chemische Reaktion sei die Reaktion von $CaO + H_2O \Rightarrow Ca(OH)_2$ genannt. Analog kann die Umsetzung auch mit Magnesiumoxid erfolgen. Des Weiteren kommt auch die Decarboxylierung von Metallcarbonaten insbesondere von Alkali- und Erdalkalimetallcarbonaten in Frage, zum Beispiel Calciumoxid $+ CO_2 \Rightarrow CaCO_3$.

Eine weitere Möglichkeit eröffnet sich in der reversiblen Desoxygenierung von Metalloxiden, insbesondere von Alkali- und Erdalkalimetalloxiden $½\ K_2O + ¼\ O_2 \Rightarrow KO_2$ bzw. $BaO + ½\ O_2 \Rightarrow BaO_2$. Chemische Reaktionen haben gegenüber den genannten Kristallwassereinlagerungen oder den reinen Physisorptionen an Feststoffen in der Regel den Vorteil, dass sie größere Energiemengen pro mol des Feststoffs aufnehmen bzw. freisetzen können. So verläuft die oben dargestellte Reaktion von Calciumoxid mit Wasser stark exotherm unter Freisetzung von etwa $\delta H = -100\ kJ/mol$. Auf diese Weise können verhältnismäßig große Energiemengen in einer geringen Menge an Feststoff gespeichert werden, wodurch sich die Kühlvorrichtung der vorliegenden Erfindung mit einer geringeren Baugröße realisieren lässt. Bei der erwähnten Reaktion von Calciumoxid unter Einwirkung von Wasser zu Calciumhydroxid wird durch Reaktion des Calciumoxids mit Wasser $H_2O$ als Reaktionsfluid, das heißt als weitere Reaktionskomponente, zu einem komplementären Produkt Calciumhydroxid $Ca(OH)_2$ Energie an die Umgebung abgegeben. Es ist jedoch ebenso möglich, dass bei dieser Reaktion Energie von der Umgebung aufgenommen wird, das heißt, dass diese Reaktion endotherm verläuft.

Als solche komplementäre Produkte zur Bildung der Reaktionskomponente und der weiteren Reaktionskomponente kommt beispielsweise $LiO_2$, $NaO_2$, $KO_2$, $Li_2O_2$, $Na_2O_2$, $K_2O_2$, $Mg(OH)_2$, $MgSO_4 \times 7\ H_2O$, $Ca(OH)_2$, $CaCO_3$, $CaSO_4 \times 2\ H_2O$, $CaCl_2 \times 2\ H_2O$, $BaCO_3$, $DaO_2$, $CoSO_4 \times 5\ H_2O$, $Mg(NH_2)_2$ und deren Mischungen in Frage. Als Reaktionskomponente, die mit einem Fluid als der weiteren Reaktionskomponente reagiert, wie oben dargestellt, kommt insbesondere $Li_2O$, $Na_2O$, $K_2O$, $MgO$, $CaO$, $BaO$, $CaSO_4$, $CaSO_4 \times 0,5\ H_2O$, $MgSO_4$, $CaCl_2 \times H_2O$, $CuSO_4 \times H_2O$, $CoSO_4$, $Mg_3N_2$ oder Mischungen hiervon in Betracht. Als weitere Reaktionskomponente in Form eines Reaktionsfluids, die mit der Reaktionskomponente zu Reaktion zu bringen ist, kommt beispielsweise $H_2O$, $CO_2$, $CO$, $O_2$, $Cl_2$, $Ba_2NH_3$ oder Mischungen von diesen zum Einsatz. Dabei kann dem Reaktionsfluid, das heißt der weiteren Reaktionskomponente auch eine Wärme übertragende Funktion z.B. in Form eines Wärmetauschers zukommen. Bei den beschriebenen Reaktionen ist von Vorteil, dass das Reaktionsfluid, das heißt die weitere Reaktionskomponente, über die für das Kühlmittel vorgesehenen Leitungen und/oder Hohlräume in die Kühlvorrichtung der elektrischen Maschine gefördert bzw. aus der Kühlvorrichtung entfernt wird. Dazu kann zum Beispiel feuchte Luft aus der Umgebung in die Kühlvorrichtung eingebracht werden für den Fall, dass Wasser für das Ablaufen der Reaktion benötigt wird. Ohne Einschränkung kann die Reaktionskomponente und/oder die weitere Reaktionskomponente in Form des Reaktionsfluids weiter ein Kühlmittel umfassen, das im Inneren der Kühlvorrichtung strömt. Mit anderen Worten können also die Reaktionskomponente und/oder die weitere Reaktionskomponente in dem Kühlmittel enthalten sein bzw. mit diesem durch die Hohlräume der Kühlvorrichtung strömen.

Dieses zusätzliche Kühlmittel ist vorzugsweise nicht an der Reaktion beteiligt und erleichtert den Wärmeübergang zum Wärmetauscher. In Betracht kommen als Kühlmittel reaktionsträge Gase mit einer großen Wärmekapazität wie Edelgase, beispielsweise Argon, Stickstoff, Schwefelhexafluorid, Distickstoffmonoxid, Luft oder Mischungen hiervon. In einer weiteren Ausführungsform umfasst das Kühlmittel die Reaktionskomponente wie beschrieben und/oder das komplementäre Produkt. Dabei ist durch ausreichende Strömung des Kühlmittels dafür zu sorgen, dass nur die endotherme Reaktion zu dem komplementären Produkt innerhalb der elektrischen Maschine erfolgt, während die exotherme Reaktion außerhalb der Kühlvorrichtung der elektrischen Maschine erfolgen soll.

In einer weiteren Ausführungsform kann die mindestens eine Reaktionskomponente Ammoniak umfassen und die Reaktion eine Zerlegung des Ammoniaks sein. Für die Zerlegung des Ammoniaks als Reaktion können die komplementären Produkte Stickstoff und/oder Wasserstoff umfassen.

Bei den oben beschriebenen Festkörperreaktionen mit einem Fluid als der weiteren Reaktionskomponente, kann das mindestens eine komplementäre Produkt in einer Rückreaktion unter Abgabe der gespeicherten Wärme in die mindestens eine Reaktionskomponente umgewandelt werden. Weiter kann in der Rückreaktion auch das oben beschriebene Reaktionsfluid gebildet werden. Derartige Reaktionen sind von Interesse, um die Reaktion und die Rückreaktion in einem Kreisprozess ablaufen zu lassen und die mindestens eine, durch die Rückreaktion umgewandelte Reaktionskomponente der elektrischen Maschine bzw. der Kühlvorrichtung zuzuführen, so dass die mindestens eine Reaktionskomponente erneut zur Wärmeaufnahme bereit steht.

In einer anderen Ausführungsform kann die Reaktionskomponente an einer Oberfläche der Kühlvorrichtung und damit der elektrischen Maschine bereitgestellt werden, wodurch die Kühlung lokal auf die entsprechende Fläche der Kühlvorrichtung bzw. der elektrischen Maschine beschränkt wird. So lässt sich örtlich begrenzt ein zusätzlicher Kühleffekt erzeugen, der durch Kontakt mit der mindestens einen Reaktionskomponente, dem Reaktionsfluid, und/oder dem Kühlmittel zustande kommt.

Ein Beispiel der Adsorptions- bzw. Desorptionsreaktionen ist die Adsorption bzw. Desorption von Wasser am Zeolith, wodurch ein Kühlungseffekt entsteht.

In einem weiteren Aspekt der Erfindung lehrt die Erfindung eine elektrische Maschine mit einem Stator und einem Rotor, welche die erfindungsgemäße Kühlvorrichtung umfasst. Die elektrische Maschine ist dabei ein Elektromotor oder ein Generator.

Obwohl die Erfindung im Detail durch bevorzugte Ausführungsformen beschrieben und näher illustriert wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Kühlvorrichtung für eine elektrische Maschine, in der ein Kühlmittel in Hohlräumen der elektrischen Maschine strömbar ist, die Kühlvorrichtung umfassend mindestens eine Reaktionskomponente, die unter Aufnahme von Wärme in einer Reaktion zu mindestens einem komplementären Produkt umgewandelt wird.

2. Kühlvorrichtung gemäß Anspruch 1, wobei die Reaktion oberhalb einer Zieltemperatur einsetzt und/oder von Katalysatoren unterstützt wird.

3. Kühlvorrichtung gemäß einem der vorstehenden Ansprüche, wobei die Reaktionskomponente an einer Fläche bzw. einem Abschnitt der elektrischen Maschine und/oder einer Fläche bzw. einem Abschnitt der Kühlvorrichtung angebracht ist, die vorzugsweise hohen thermischen Beanspruchungen ausgesetzt ist.

4. Kühlvorrichtung gemäß einem der vorhergehenden Ansprüche, wobei das Kühlmittel die Reaktionskomponente und/oder das mindestens eine komplementäre Produkt umfasst.

5. Kühlvorrichtung gemäß einem der vorhergehenden Ansprüche, wobei die mindestens eine Reaktionskomponente Ammoniak umfasst; und die Reaktion eine Zerlegung des Ammoniaks umfasst.

6. Kühlvorrichtung gemäß Anspruch 5, wobei das mindestens eine komplementäre Produkt Stickstoff $N_2$ und/oder Wasserstoff $H_2$ umfasst.

7. Kühlvorrichtung gemäß einem der vorhergehenden Ansprüche, wobei das mindestens eine komplementäre Produkt in einer Rückreaktion unter Abgabe von Wärme in die mindestens eine Reaktionskomponente umwandelbar ist.

8. Kühlvorrichtung gemäß Anspruch 7, wobei die Rückreaktion in einem Kreisprozess abläuft, und die durch die Rückreaktion umgewandelte mindestens eine Reaktionskomponente der Kühlvorrichtung zuführbar ist.

**9.** Kühlvorrichtung gemäß einem der vorhergehenden Ansprüche,
wobei die mindestens eine Reaktionskomponente Methanol umfasst, das aufgespalten wird,
wobei das komplementäre Produkt Methanal HCHO, Kohlenmonoxid CO und/oder elementaren Wasserstoff $H_2$ umfasst.

**10.** Kühlvorrichtung gemäß einem der vorhergehenden Ansprüche,
wobei die mindestens eine Reaktionskomponente ein Metallhydrid, vorzugsweise Calciumhydrid $CaH_2$ umfasst, das durch die Reaktion dehydriert wird.

**11.** Kühlvorrichtung gemäß Anspruch 10,
wobei das mindestens eine komplementäre Produkt Wasserstoff und/oder ein Metallhydroxid, insbesondere Calciumhydroxid $Ca(OH)_2$ umfasst.

**12.** Kühlvorrichtung gemäß einem der vorhergehenden Ansprüche,
wobei die mindestens Reaktionskomponente ein Metallhydroxid und/oder ein Salzhydrat ist, und die Reaktion eine Dehydratisierung umfasst,
wobei die komplementären Produkte Wasser umfassen.

**13.** Kühlvorrichtung gemäß einem der vorhergehenden Ansprüche,
wobei die mindestens eine Reaktionskomponente ein Metallcarbonat, insbesondere Calciumcarbonat $CaCO_3$ umfasst, und die Reaktion eine Decarboxylierung umfasst.

**14.** Kühlvorrichtung gemäß einem der vorhergehenden Ansprüche,
wobei die mindestens eine Reaktionskomponente ein Salzammoniat umfasst, und die Reaktion eine Abspaltung von Ammoniak umfasst.

**15.** Kühlvorrichtung gemäß einem der vorhergehenden Ansprüche,
wobei die mindestens eine Reaktionskomponente ein Zeolith umfasst, und die Reaktion eine Adsorption eines Stoffes, vorzugsweise Wasser an das Zeolith umfasst.

**16.** Elektrische Maschine umfassend eine Kühlvorrichtung gemäß den vorhergehenden Ansprüchen,
die elektrische Maschine weiter umfassend einen Stator und einen Rotor.

**17.** Elektrische Maschine gemäß Anspruch 16,
wobei die elektrische Maschine ein Generator und/oder ein Elektromotor ist.

Europäisches
Patentamt

European
Patent Office

Office européen
des brevets

## EUROPÄISCHER RECHERCHENBERICHT

Nummer der Anmeldung

EP 13 19 0273

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/297895 A1 (MCLEAN GERARD F [CA] ET AL) 3. Dezember 2009 (2009-12-03) <br> * Absätze [0002] - [0003], [0009], [0011], [0015] - [0018], [0030], [0037] - [0039]; Abbildungen 1,2 * <br> ----- | 1-8,16, 17 | INV. <br> C09K5/16 |
| X | LOVEGROVE K ET AL: "Developing ammonia based thermochemical energy storage for dish power plants", SOLAR ENERGY, PERGAMON PRESS. OXFORD, GB, Bd. 76, Nr. 1-3, 1. Januar 2004 (2004-01-01), Seiten 331-337, XP004481475, ISSN: 0038-092X, DOI: 10.1016/J.SOLENER.2003.07.020 <br> * 1. Introduction; 2. Concept; Abbildung 2 * <br> ----- | 1-8,16, 17 | |

RECHERCHIERTE
SACHGEBIETE (IPC)

C09K
F28D
H01F
H02K
H01M

~~Der vorliegende Recherchenbericht wurde für alle Patentansprüche erstellt~~

| Recherchenort | Abschlußdatum der Recherche | Prüfer |
|---|---|---|
| Den Haag | 15. April 2014 | Martinez Marcos, V |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

```
Siehe Ergänzungsblatt B
```

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

```
5, 6(vollständig); 1-4, 7, 8, 16, 17(teilweise)
```

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches Patentamt
European Patent Office
Office européen des brevets

**MANGELNDE EINHEITLICHKEIT DER ERFINDUNG ERGÄNZUNGSBLATT B**

Nummer der Anmeldung

EP 13 19 0273

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 5, 6(vollständig); 1-4, 7, 8, 16, 17(teilweise)

   Kühlvorrichtung für eine elektrische Maschine und elektrische Maschine mit der Kühlvorrichtung, in der ein Kühlmittel in Hohlräumen der elektrischen Maschine strömbar ist, die Kühlvorrichtung umfassend mindestens eine Reaktionskomponente, die unter Aufnahme von Wärme in einer Reaktion zu mindestens einem komplementären Produkt umgewandelt wird, wobei die mindestens eine Reaktionskomponente Ammoniak umfasst; und die Reaktion eine Zerlegung des Ammoniaks umfasst.
   ---

2. Ansprüche: 9(vollständig); 1-4, 7, 8, 16, 17(teilweise)

   Kühlvorrichtung für eine elektrische Maschine und elektrische Maschine mit der Kühlvorrichtung, in der ein Kühlmittel in Hohlräumen der elektrischen Maschine strömbar ist, die Kühlvorrichtung umfassend mindestens eine Reaktionskomponente, die unter Aufnahme von Wärme in einer Reaktion zu mindestens einem komplementären Produkt umgewandelt wird, wobei die mindestens eine Reaktionskomponente Methanol umfasst, das aufgespalten wird, wobei das komplementäre Produkt Methanal HCHO, Kohlenmonoxid CO und/oder elementaren Wasserstoff H2 umfasst.
   ---

3. Ansprüche: 10, 11(vollständig); 1-4, 7, 8, 16, 17(teilweise)

   Kühlvorrichtung für eine elektrische Maschine und elektrische Maschine mit der Kühlvorrichtung, in der ein Kühlmittel in Hohlräumen der elektrischen Maschine strömbar ist, die Kühlvorrichtung umfassend mindestens eine Reaktionskomponente, die unter Aufnahme von Wärme in einer Reaktion zu mindestens einem komplementären Produkt umgewandelt wird, wobei die mindestens eine Reaktionskomponente ein Metallhydrid, vorzugsweise Calciumhydrid CaH2 umfasst, das durch die Reaktion dehydriert wird.
   ---

4. Ansprüche: 12(vollständig); 1-4, 7, 8, 16, 17(teilweise)

   Kühlvorrichtung für eine elektrische Maschine und elektrische Maschine mit der Kühlvorrichtung, in der ein Kühlmittel in Hohlräumen der elektrischen Maschine strömbar ist, die Kühlvorrichtung umfassend mindestens eine Reaktionskomponente, die unter Aufnahme von Wärme in einer Reaktion zu mindestens einem komplementären Produkt umgewandelt wird, wobei die mindestens eine Reaktionskomponente Methanol umfasst, das aufgespalten wird,

Europäisches
Patentamt

European
Patent Office

Office européen
des brevets

**MANGELNDE EINHEITLICHKEIT
DER ERFINDUNG
ERGÄNZUNGSBLATT B**

Nummer der Anmeldung

EP 13 19 0273

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

wobei die mindestens Reaktionskomponente ein Metallhydroxid und/oder ein Salzhydrat ist, und die Reaktion eine Dehydratisierung umfasst,wobei die komplementären Produkte Wasser umfassen.

---

5. Ansprüche: 13(vollständig); 1-4, 7, 8, 16, 17(teilweise)

Kühlvorrichtung für eine elektrische Maschine und elektrische Maschine mit der Kühlvorrichtung, in der ein Kühlmittel in Hohlräumen der elektrischen Maschine strömbar ist, die Kühlvorrichtung umfassend mindestens eine Reaktionskomponente, die unter Aufnahme von Wärme in einer Reaktion zu mindestens einem komplementären Produkt umgewandelt wird, wobei die mindestens eine Reaktionskomponente Methanol umfasst, das aufgespalten wird, wobei die mindestens eine Reaktionskomponente ein Metallcarbonat, insbesondere Calciumcarbonat CaCO3 umfasst, und die Reaktion eine Decarboxylierung umfasst.

---

6. Ansprüche: 14(vollständig); 1-4, 7, 8, 16, 17(teilweise)

Kühlvorrichtung für eine elektrische Maschine und elektrische Maschine mit der Kühlvorrichtung, in der ein Kühlmittel in Hohlräumen der elektrischen Maschine strömbar ist, die Kühlvorrichtung umfassend mindestens eine Reaktionskomponente, die unter Aufnahme von Wärme in einer Reaktion zu mindestens einem komplementären Produkt umgewandelt wird, wobei die mindestens eine Reaktionskomponente Methanol umfasst, das aufgespalten wird, wobei die mindestens eine Reaktionskomponente ein Salzammoniat umfasst, und die Reaktion eine Abspaltung von Ammoniak umfasst.

---

7. Ansprüche: 15(vollständig); 1-4, 7, 8, 16, 17(teilweise)

Kühlvorrichtung für eine elektrische Maschine und elektrische Maschine mit der Kühlvorrichtung, in der ein Kühlmittel in Hohlräumen der elektrischen Maschine strömbar ist, die Kühlvorrichtung umfassend mindestens eine Reaktionskomponente, die unter Aufnahme von Wärme in einer Reaktion zu mindestens einem komplementären Produkt umgewandelt wird, wobei die mindestens eine Reaktionskomponente Methanol umfasst, das aufgespalten wird, wobei die mindestens eine Reaktionskomponente ein Zeolith umfasst, und die Reaktion eine Adsorption eines Stoffes, vorzugsweise Wasser an das Zeolith umfasst.

---

**ANHANG ZUM EUROPÄISCHEN RECHERCHENBERICHT
ÜBER DIE EUROPÄISCHE PATENTANMELDUNG NR.**

EP 13 19 0273

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-04-2014

| Im Recherchenbericht angeführtes Patentdokument | Datum der Veröffentlichung | Mitglied(er) der Patentfamilie | Datum der Veröffentlichung |
|---|---|---|---|
| US 2009297895 A1 | 03-12-2009 | KEINE | |

Für nähere Einzelheiten zu diesem Anhang : siehe Amtsblatt des Europäischen Patentamts, Nr.12/82

EPO FORM P0461